# FASCICULE DE BREVET EUROPEEN

(11) **EP 3 863 929 B1**
(45) Date de publication et mention de la délivrance du brevet: **29.11.2023**
(21) Numéro de dépôt: 19805363.9
(22) Date de dépôt: 04.10.2019
(51) Int. Cl.: B64D 27/26

(54) **ENSEMBLE DE SUSPENSION POUR UNE TURBOMACHINE**
TURBOMASCHINENAUFHÄNGUNGSANORDNUNG
SUSPENSION ASSEMBLY FOR A TURBOMACHINE

(30) Priorité: 08.10.2018 FR 1859297
(43) Date de publication de la demande: 18.08.2021
(73) Titulaire: SAFRAN AIRCRAFT ENGINES, 75015 Paris (FR)
(72) Inventeur: GARNAUD, Quentin, Matthias, Emmanuel, 77550 MOISSY-CRAMAYEL (FR); HELLEGOUARCH, Antoine, Elie, 77550 MOISSY-CRAMAYEL (FR)
(74) Mandataire: Ernest Gutmann - Yves Plasseraud S.A.S.
(86) Numéro de dépôt international: PCT/FR2019/052355
(87) Numéro de publication internationale: WO 2020/074811

(56) Documents cités:
- FR-A1- 2 799 432
- FR-A1- 2 867 155
- FR-B1- 2 867 155

## Description

### DOMAINE

La présente invention concerne un ensemble de suspension pour une turbomachine, en particulier pour un turboréacteur à double flux.

### CONTEXTE

Un turboréacteur à double flux comporte classiquement une veine d'écoulement d'un flux primaire ou veine primaire comprenant, d'amont en aval dans le sens de circulation du flux de gaz au sein de la turbomachine, un compresseur basse pression, un compresseur haute pression, une chambre de combustion, une turbine haute pression et une turbine basse pression. Le turboréacteur comporte également une veine d'écoulement d'un flux secondaire ou veine secondaire, située radialement à l'extérieur de la veine primaire. Les termes radial et axial sont définis par rapport à l'axe de la turbomachine. Les termes amont et aval sont définis par rapport au sens de circulation des flux de gaz au sein de la turbomachine.

Le turboréacteur est généralement fixé à un pylône ou mât d'un aéronef, ledit pylône étant lui-même fixé à la structure de l'aéronef, par exemple à la voilure. Le pylône permet de transmettre les efforts générés par le turboréacteur à la structure de l'aéronef et permet également le cheminement de carburant, d'air et systèmes électriques et hydrauliques entre le turboréacteur et l'aéronef.

La demande de brevet FR 2 867 155 au nom de la Demanderesse divulgue une turbomachine fixée à un pylône par l'intermédiaire d'un ensemble de suspension comportant un ensemble de suspension amont et un ensemble de suspension aval. L'ensemble de suspension amont est fixé à un carter intermédiaire solidaire d'un carter de soufflante, L'ensemble de suspension aval étant fixé à un carter d'échappement. Les deux carters sont des éléments structuraux de la turbomachine.

Les dispositifs de suspension ont pour fonction d'assurer la transmission des efforts mécaniques entre la turbomachine et le pylône. Ces efforts sont notamment la poussée générée par la turbomachine, orientée selon l'axe de la turbomachine noté X, les charges aérodynamiques latérales, orientées selon un axe noté Y et le poids de la turbomachine, orientée verticalement selon un axe noté Z. Les axes X, Y et Z sont orthogonaux deux à deux.

Dans la suite de la description, on s'intéressera en particulier au ensemble de suspension amont.

Un tel ensemble de suspension amont connu comporte classiquement une poutre destinée à être fixée à un pylône d'un aéronef, une partie cylindrique articulée sur un boîtier de rotule, le boîtier de rotule comportant un corps, une noix de rotule articulée sur le corps, la partie cylindrique étant montée pivotante autour de son axe dans la noix de rotule. Le corps du boîtier de rotule est fixé à une partie fixe du turboréacteur, par exemple un carter intermédiaire ou encore un carter inter-compresseurs, situé entre le compresseur basse pression et le compresseur haute pression de la veine primaire.

Il existe actuellement un besoin d'augmenter le taux de dilution des turboréacteurs. On rappelle que le taux de dilution est le rapport du débit du flux secondaire sur le débit du flux primaire. Afin d'augmenter le taux de dilution, il est donc nécessaire d'augmenter la section de la veine secondaire, ce qui nécessite notamment de réduire les dimensions de l'ensemble de suspension amont, en particulier au niveau de sa zone de fixation sur le carter correspondant de la zone de la turbomachine.

### RESUME DE L'INVENTION

L'invention vise à répondre à ce besoin, de manière simple, fiable et peu onéreuse.

A cet effet, l'invention concerne un ensemble de suspension pour une turbomachine, comportant une poutre destinée à être fixée à un pylône d'un aéronef, et une partie cylindrique articulée sur un boîtier de rotule, le boîtier de rotule comportant un corps, et une noix de rotule articulée sur le corps, la partie cylindrique étant montée pivotante autour de son axe dans la noix de rotule, caractérisé en ce que la partie cylindrique est destinée à être solidaire d'une partie fixe de la turbomachine, le corps du boîtier de rotule étant solidaire de la poutre. La partie cylindrique est montée, au moins en partie, dans un logement du corps, un jeu étant prévu entre ladite partie cylindrique et le corps.

La partie cylindrique présente un diamètre inférieur aux dimensions du corps du boîtier de rotule, de sorte que ladite partie cylindrique peut être fixée dans une zone de la turbomachine présentant un faible encombrement disponible pour assurer une telle fixation, par exemple au niveau d'un carter intermédiaire de la turbomachine.

La turbomachine peut être un turboréacteur, en particulier un turboréacteur à double flux.

L'ensemble de suspension n'appartient pas à la turbomachine.

Le corps du boîtier de rotule peut venir de matière avec au moins une partie de la poutre.

La poutre peut être formée d'au moins deux parties assemblées l'une à l'autre, par exemple par vissage ou par boulonnage. Lesdits parties de la poutre peuvent être symétriques l'une par rapport à l'autre.

De cette manière, en cas de propagation d'une fissure dans l'une des parties de la poutre, ladite fissure n'endommage pas l'autre partie de la poutre, qui peut continuer d'assurer pleinement son rôle.

Le jeu orienté perpendiculairement à l'axe de la partie cylindrique, entre ladite partie cylindrique et le corps, est par exemple compris entre 1 et 10 mm.

Le jeu orienté selon l'axe de la partie cylindrique, entre ladite partie cylindrique et le corps, est par exemple compris entre 1 et 10 mm.

De tels jeux peuvent autoriser la rotation de la partie cylindrique selon deux axes de rotation orthogonaux à l'axe de ladite partie cylindrique. La rotation permise par ces jeux, de la partie cylindrique dans le corps, selon chacun de ces deux axes, est par exemple limitée à une valeur d'angle comprise entre 2° et 10°.

L'ensemble peut comporter un élément de liaison monté dans le corps et monté avec jeu dans la partie cylindrique, ledit jeu étant permis notamment selon la direction de l'axe de la partie cylindrique.

L'élément de liaison est par exemple cylindrique et peut être monté dans des orifices cylindriques de la partie cylindrique et de la poutre. Ledit élément de liaison est ainsi configuré pour mettre en oeuvre une fonction de sûreté après défaillance (également appelée « Fail Safe »). L'élément de liaison est apte à transmettre des efforts, par contact avec la partie cylindrique et/ou avec la poutre, en cas de rattrapage du jeu précité dû à une défaillance. Ce jeu est par exemple compris entre 1 et 10 mm.

La poutre peut comporter une partie amont au niveau de laquelle est situé le boîtier de rotule, et une partie aval servant à la fixation d'un palonnier destiné à supporter des bielles de reprise d'effort.

Le palonnier peut être articulé sur la partie aval de la poutre. Le palonnier peut présenter deux extrémités circonférentiellement décalées l'une de l'autre. Chaque biellette peut comporter une première extrémité articulée sur l'une des extrémités circonférentielles du palonnier et une seconde extrémité sur une partie fixe de la turbomachine.

La partie cylindrique peut comporter une collerette, ladite collerette étant destinée à être fixée à la partie fixe de la turbomachine.

Une telle fixation est par exemple assurée par l'intermédiaire d'au moins un boulon ou d'au moins une vis.

La partie cylindrique peut comporter au moins une zone en creux située en regard de la vis, ladite zone en creux étant ménagée en aval de la collerette.

La zone en creux permet l'engagement d'une vis, en particulier de la tête de vis et/ou de l'outil de vissage correspondant, en vue de la fixation de la partie cylindrique sur la partie fixe de la turbomachine.

La partie cylindrique peut comporter une extrémité amont cylindrique située en amont de la collerette.

Ladite extrémité amont est apte à venir s'engager dans un logement de forme complémentaire de la partie fixe de la turbomachine, de manière à réaliser le centrage et/ou le passage d'effort entre ladite partie cylindrique et ladite partie fixe de la turbomachine.

L'invention concerne également un turboréacteur à double flux comportant une veine d'écoulement d'un flux primaire, dite veine primaire, délimitée par une paroi radialement interne et une paroi radialement externe et une veine d'écoulement d'un flux secondaire, dite veine secondaire, entourant la veine primaire et délimitée une paroi radialement interne et une paroi radialement externe, caractérisé en ce qu'il comporte un ensemble de suspension du type précité, et en ce que la partie cylindrique est fixée à une partie fixe du turboréacteur, située radialement entre la paroi interne de la veine secondaire et la paroi externe de la veine primaire, ladite partie fixe étant solidaire de l'une au moins desdites parois.

Ladite partie fixe peut s'étendre radialement vers l'intérieur depuis la paroi interne de la veine secondaire. Ladite partie fixe peut venir de matière avec la paroi interne de la veine secondaire.

La veine secondaire peut comporter au moins un bras s'étendant radialement entre les parois interne et externe de la veine secondaire, ledit bras étant situé en aval d'une soufflante du turboréacteur, la partie fixe à laquelle est fixée ladite partie cylindrique étant située axialement en regard du bras.

Le taux de dilution dudit turboréacteur peut être supérieur à 10.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une schématique, en coupe axiale, d'une partie d'un turboréacteur à double flux selon une forme de réalisation de l'invention ;
- la figure 2 est une de détail de la figure 1, montrant le montage de l'ensemble de suspension selon l'invention dans le turboréacteur ;
- la figure 3 est une vue en perspective de la partie amont de l'ensemble de suspension ;
- la figure 4 est une vue en perspective de la partie amont de la poutre, formant notamment le corps du boîtier de rotule ;
- la figure 5 est une vue en coupe axiale de la partie amont de l'ensemble de suspension.

### DESCRIPTION DETAILLEE

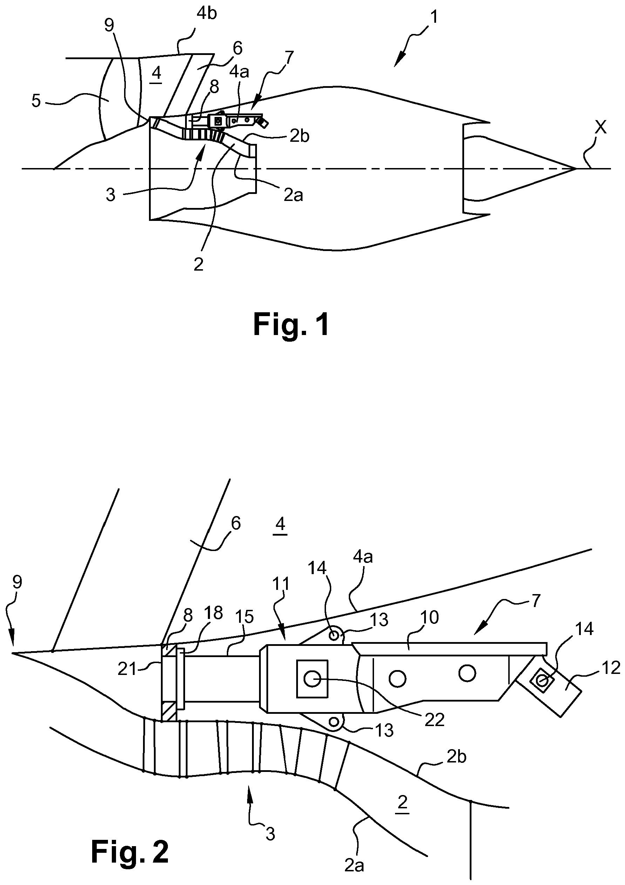

La figure 1 représente un turboréacteur 1 à double flux selon une forme de réalisation de l'invention. Celui-ci s'étend selon un axe X. Dans la suite de la description, les termes axial et radial sont définis par rapport à l'axe X. Le turboréacteur 1 comporte une veine d'écoulement d'un flux primaire ou veine primaire 2 comprenant, d'amont en aval dans le sens de circulation du flux de gaz au sein de la turbomachine, un compresseur basse pression 3, un compresseur haute pression, une chambre de combustion, une turbine haute pression et une turbine basse pression. Seul le compresseur basse pression 3 est représenté. Le turboréacteur 1 comporte également une veine d'écoulement d'un flux secondaire ou veine secondaire 4, située radialement à l'extérieur de la veine primaire 2.

Les termes amont et aval sont définis par rapport au sens de circulation des flux de gaz au sein du turboréacteur 1.

La veine primaire 2 est délimitée par une paroi radialement interne 2a et une paroi radialement externe 2b. De même, la veine secondaire 4 est délimitée par une délimitée une paroi radialement interne 4a et une paroi radialement externe 4b. Une soufflante 5 est située en amont des veines primaire et secondaire 2, 4. La veine secondaire 4 comporte au moins un bras 6 s'étendant radialement entre les parois interne 4a et externe 4b de la veine secondaire 4, ledit bras 6 étant ainsi situé en aval de la soufflante 5. Ledit bras 6 peut être incliné par rapport à la direction radiale.

Le turboréacteur 1 est fixé à un pylône (ou mât, non représenté) d'un aéronef, ledit pylône étant lui-même fixé à la structure de l'aéronef, par exemple à la voilure. Le pylône permet de transmettre les efforts générés par le turboréacteur 1 à la structure de l'aéronef et permet également le cheminement de carburant, d'air et systèmes électriques et hydrauliques entre le turboréacteur 1 et l'aéronef.

En particulier, le turboréacteur 1 est fixé au pylône par l'intermédiaire d'un ensemble de suspension amont 7 et un ensemble de suspension aval.

L'ensemble de suspension amont 7 est fixé à un carter intermédiaire, ledit carter intermédiaire formant notamment une partie des parois 2a, 2b, 4a et 4b. L'ensemble de suspension amont est fixé à un carter d'échappement.

L'ensemble de suspension amont 7 est en particulier fixé au niveau d'une interface 8 située radialement entre la paroi interne 4a de la veine secondaire 4 et la paroi externe 2b de la veine primaire 2, ladite interface 8 étant solidaire de l'une au moins desdites parois 4a, 2b ou venant de matière avec l'une au moins desdites parois 4a, 2b. L'interface 8 constitue donc une partie fixe de la turbomachine.

L'interface 8 peut être située axialement en regard du bras 6 de la veine secondaire 4 et/ou en regard du compresseur basse pression 3 de la veine primaire 2.

On notera que l'interface 8 est située à proximité d'une zone amont de raccordement 9 entre la paroi externe 2b de la veine primaire 2 et de la paroi interne 4a de la veine secondaire 4.

Le taux de dilution du turboréacteur 1 est relativement important voire très élevé, par exemple compris entre 10 et 20. La section de la veine secondaire 4 est donc importante, et l'encombrement disponible à proximité de ladite zone de raccordement 9 est radialement limitée.

L'invention permet d'assurer la fixation de l'ensemble de suspension amont 7 dans une zone aux dimensions radiales réduites.

Pour cela, ledit ensemble de suspension 7 comporte une poutre 10 destinée à être fixée à un pylône d'un aéronef, par exemple par vissage ou par boulonnage.

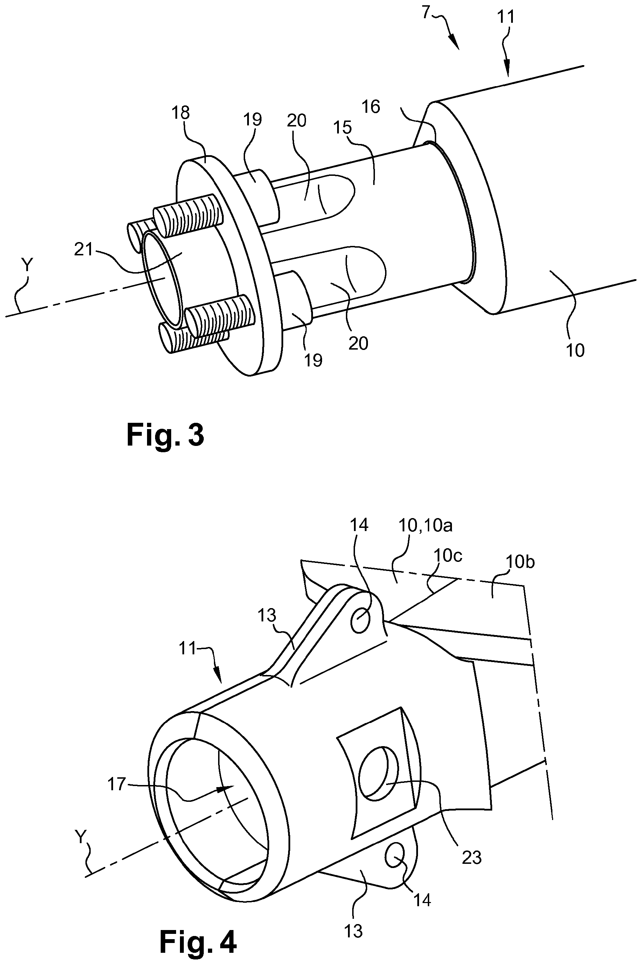

La poutre 10 s'étend globalement axialement et comporte deux parties 10a, 10b (figure 4) symétriques l'une par rapport à l'autre, par rapport à un plan radial et en appui l'une contre l'autre au niveau d'une zone plane de jonction 10c. La poutre 10 comporte une partie amont formant un corps 11 d'un boîtier de rotule, et une partie arrière comportant un pion cylindrique 12 oblique (figure 2), s'étendant radialement vers l'intérieur. Ledit pion 12 sert au montage d'un palonnier non représenté ici.

Chaque partie10a, 10b de la poutre 10 comporte, au niveau de ladite zone amont définissant le corps 11, des brides 13, respectivement radialement interne et externe. Les brides 13 et le pion 12 comportent des orifices 14 servant à l'engagement de boulons permettant de solidariser les deux parties 10a, 10b de la poutre 10 entre elles.

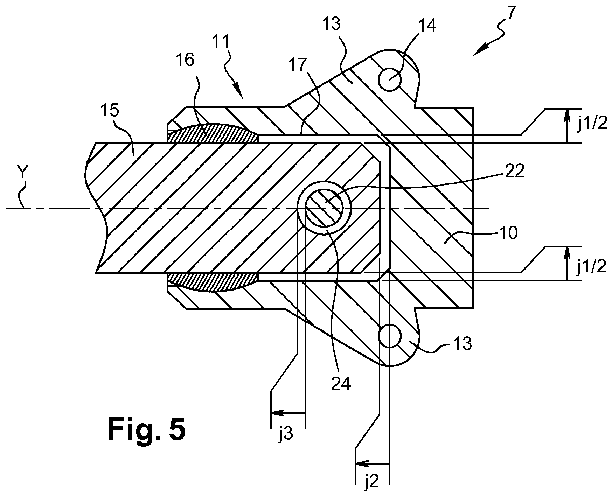

L'ensemble 7 comporte en outre une partie cylindrique 15, d'axe Y, articulée sur le corps 11, par l'intermédiaire d'une noix de rotule 16 (figure 5).

La noix de rotule 16 comporte une surface externe sphérique, montée dans un logement de forme complémentaire du corps 11. Le corps 11 et la noix de rotule 16 forment le boîtier de rotule. La noix de rotule 16 comporte un trou central dans lequel est engagé la partie cylindrique. Le diamètre du trou central de la noix de rotule 16 correspond sensiblement au diamètre externe de la partie cylindrique 15. La partie cylindrique 16 est montée pivotante autour de son axe Y dans la noix de rotule 16.

L'extrémité aval de la partie cylindrique 16 est montée dans un logement 17 du corps 11, avec un jeu j1 orienté perpendiculairement à l'axe de la partie cylindrique 16, et avec un jeu j2 orienté selon l'axe de la partie cylindrique 16.

Le jeu j1 est par exemple compris entre 1 mm et 10 mm. Le jeu j2 est par exemple compris entre 1 mm et 10 mm. Les jeux j1 et j2 autorisent la rotation de la partie cylindrique 16 selon deux axes de rotation orthogonaux à l'axe Y de ladite partie cylindrique 16. La rotation permise par ces jeux, de la partie cylindrique 16 dans le corps 11, selon chacun de ces deux axes, est par exemple comprise entre 2 et 10°.

La partie cylindrique 16 comporte en outre une collerette 18 destinée à être fixée sur l'interface 8, par l'intermédiaire de vis 19.

Une zone en creux 20 est située en regard de chaque vis 19, chaque zone en creux 20 étant ménagée en aval de la collerette 18. Chaque zone en creux 20 permet l'engagement de la vis 19 correspondante, en particulier de la tête de vis et/ou de l'outil de vissage correspondant.

La partie cylindrique 16 comporte de plus une extrémité amont cylindrique 21 située en amont de la collerette 18, destinée à venir s'engager dans un logement de forme complémentaire de l'interface 8, de manière à réaliser le centrage et/ou le passage d'effort entre ladite partie cylindrique 16 et ladite interface 8.

L'ensemble 7 comporte de plus un élément de liaison 22 se présentant ici sous la forme d'une tige cylindrique, monté avec un jeu j3 dans des orifices circulaire 23 (figure 4) du corps 11 et dans un orifice 24 (figure 5) de la partie cylindrique 16.

Ledit élément de liaison 22 est ainsi configuré pour mettre en oeuvre une fonction de sûreté après défaillance (également appelée « Fail Safe »). L'élément de liaison 22 est ainsi apte à transmettre des efforts, par contact avec la partie cylindrique 16 et/ou avec la poutre 10, en cas de rattrapage du jeu j3 précité dû à une défaillance. Le jeu j3 est par exemple compris entre 1 et 10 mm.

## Revendications

1. Ensemble de suspension (7) pour une turbomachine (1), comportant une poutre (10) destinée à être fixée à un pylône d'un aéronef, et une partie cylindrique (15) articulée sur un boîtier de rotule, le boîtier de rotule comportant un corps (11) et une noix de rotule (16) articulée sur le corps (11), la partie cylindrique (15) étant montée pivotante autour de son axe (Y) dans la noix de rotule (16), la partie cylindrique (15) étant destinée à être solidaire d'une partie fixe (8) de la turbomachine (1), le corps (11) du boîtier de rotule étant solidaire de la poutre (10), **caractérisé en ce que** la partie cylindrique (15) est montée, au moins en partie, dans un logement (17) du corps (11), un jeu (j1, j2) étant prévu entre ladite partie cylindrique (15) et le corps (11).

2. Ensemble (7) selon la revendication 1, **caractérisé en ce qu'**il comporte un élément de liaison (22) monté dans le corps (11) et monté avec jeu (j3) dans la partie cylindrique (15), ledit jeu (j3) étant permis notamment selon la direction de l'axe (Y) de la partie cylindrique (15).

3. Ensemble (7) selon l'une des revendications précédentes, **caractérisé en ce que** la poutre (10) comporte une partie amont au niveau de laquelle est situé le boîtier de rotule, et une partie aval servant à la fixation d'un palonnier destiné à supporter des bielles de reprise d'effort.

4. Ensemble (7) selon l'une des revendications précédentes **caractérisé en ce que** la partie cylindrique (15) comporte une collerette (18), ladite collerette (18) étant destinée à être fixée à la partie fixe (8) de la turbomachine (1).

5. Ensemble (7) selon la revendication précédente, **caractérisé en ce que** la partie cylindrique (15) comporte au moins une zone en creux (20) destinée à être située en regard d'une vis, ladite zone en creux (20) étant ménagée en aval de la collerette (18).

6. Ensemble (7) selon la revendication 4 ou 5, **caractérisé en ce que** la partie cylindrique (15) comporte une extrémité amont cylindrique (21) située en amont de la collerette (18).

7. Turboréacteur (1) à double flux comportant une veine d'écoulement d'un flux primaire, dite veine primaire (2), délimitée par une paroi radialement interne (2a) et une paroi radialement externe (2b) et une veine d'écoulement d'un flux secondaire, dite veine secondaire (4), entourant la veine primaire et délimitée une paroi radialement interne (4a) et une paroi radialement externe (4b), **caractérisé en ce qu'**il comporte un ensemble de suspension (7) selon l'une des revendications précédentes, et **en ce que** la partie cylindrique (15) est fixée à une partie fixe (8) du turboréacteur (1), située radialement entre la paroi interne (4a) de la veine secondaire (4) et la paroi externe (2b) de la veine primaire (2), ladite partie fixe (8) étant solidaire de l'une au moins desdites parois (4a, 2b).

8. Turboréacteur (1) selon la revendication précédente, **caractérisé en ce que** la veine secondaire (4) comporte au moins un bras (6) s'étendant radialement entre les parois interne et externe (4a, 4b) de la veine secondaire (4), ledit bras (6) étant situé en aval d'une soufflante (5) du turboréacteur (1), la partie fixe (8) à laquelle est fixée ladite partie cylindrique (15) étant située axialement en regard du bras (6).

9. Turboréacteur (1) selon la revendication 7 ou 8, **caractérisé en ce que** le taux de dilution dudit turboréacteur (1) est supérieur à 10.

## Patentansprüche

1. Aufhängungsanordnung (7) für ein Turbotriebwerk (1), enthaltend einen Träger (10), der dazu bestimmt ist, an einem Tragmast eines Luftfahrzeugs befestigt zu werden, und einen zylindrischen Abschnitt (15), der an einem Kugelgelenkgehäuse angelenkt ist, wobei das Kugelgelenkgehäuse einen Körper (11) und eine Kugelgelenknuss (16) aufweist, die an dem Körper (11) angelenkt ist, wobei der zylindrische Abschnitt (15) um seine Achse (Y) schwenkbar in der Kugelgelenknuss (16) gelagert ist, wobei der zylindrische Abschnitt (15) dazu bestimmt ist, fest mit einem feststehenden Abschnitt (8) des Turbotriebwerks (1) verbunden zu sein, wobei der Körper (11) des Kugelgelenksgehäuses fest mit dem Träger (10) verbunden ist, **dadurch gekennzeichnet, dass** der zylindrische Abschnitt (15) zumindest teilweise in einer Aufnahme (17) des Körpers (11) gelagert ist, wobei zwischen dem zylindrischen Abschnitt (15) und dem Körper (11) ein Spiel (j1, j2) vorgesehen ist.

2. Anordnung (7) nach Anspruch 1,
**dadurch gekennzeichnet, dass** sie ein Verbindungselement (22) umfasst, das im Körper (11) montiert und mit Spiel (j3) im zylindrischen Abschnitt (15) gelagert ist, wobei das Spiel (j3) insbesondere in Richtung der Achse (Y) des zylindrischen Abschnitts (15) möglich ist.

3. Anordnung (7) nach einem der vorangehenden Ansprüche,
**dadurch gekennzeichnet, dass** der Träger (10) einen stromaufwärts gelegenen Abschnitt, in dessen Bereich sich das Kugelgelenkgehäuse befindet, und einen stromabwärts gelegenen Abschnitt umfasst, der zur Befestigung eines Steuerhebels zum Abstützen von Kraftaufnahmestangen dient.

4. Anordnung (7) nach einem der vorangehenden Ansprüche,
**dadurch gekennzeichnet, dass** der zylindrische Abschnitt (15) einen Kragen (18) aufweist, wobei der Kragen (18) dazu bestimmt ist, an dem feststehenden Abschnitt (8) des Turbotriebwerks (1) befestigt zu werden.

5. Anordnung (7) nach dem vorangehenden Anspruch,
**dadurch gekennzeichnet, dass** der zylindrische Abschnitt (15) zumindest einen vertieften Bereich (20) aufweist, der dazu bestimmt ist, einer Schraube gegenüberliegend angeordnet zu werden, wobei der vertiefte Bereich (20) stromabwärts des Kragens (18) angeordnet ist.

6. Anordnung (7) nach Anspruch 4 oder 5,
**dadurch gekennzeichnet, dass** der zylindrische Abschnitt (15) ein stromaufwärts gelegenes zylindrisches Ende (21) aufweist, das sich stromaufwärts des Kragens (18) befindet.

7. Zweikreis-Turbostrahltriebwerk (1) mit einem Strömungsweg für eine Primärströmung, Primärströmungsweg (2) genannt, der von einer radial inneren Wand (2a) und einer radial äußeren Wand (2b) begrenzt wird, und mit einem Strömungsweg für eine Sekundärströmung, Sekundärströmungsweg (4) genannt, der den Primärströmungsweg umgibt und von einer radial inneren Wand (4a) und einer radial äußeren Wand (4b) begrenzt wird,
**dadurch gekennzeichnet, dass** es eine Aufhängungsanordnung (7) nach einem der vorangehenden Ansprüche umfasst, und dass der zylindrische Abschnitt (15) an einem feststehenden Abschnitt (8) des Turbostrahltriebwerks (1) befestigt ist, der sich radial zwischen der inneren Wand (4a) des Sekundärströmungswegs (4) und der äußeren Wand (2b) des Primärströmungswegs (2) befindet, wobei der feststehende Abschnitt (8) fest mit zumindest einer der Wände (4a, 2b) verbunden ist.

8. Turbostrahltriebwerk (1) nach dem vorangehenden Anspruch,
**dadurch gekennzeichnet, dass** der Sekundärströmungsweg (4) zumindest einen Arm (6) umfasst, der sich radial zwischen der inneren und der äußeren Wand (4a, 4b) des Sekundärströmungswegs (4) erstreckt, wobei der Arm (6) stromabwärts von einem Gebläse (5) des Turbostrahltriebwerks (1) angeordnet ist, wobei der feststehende Abschnitt (8), an dem der zylindrische Abschnitt (15) befestigt ist, dem Arm (6) axial gegenüberliegend angeordnet ist.

9. Turbostrahltriebwerk (1) nach Anspruch 7 oder 8,
**dadurch gekennzeichnet, dass** das Nebenstromverhältnis des Turbostrahltriebwerks (1) größer als 10 ist.

## Claims

1. A suspension system (7) for a turbomachine (1), comprising a beam (10) intended to be attached to a pylon of an aircraft, and a cylindrical part (15) articulated on a ball joint housing, the ball joint housing comprising a body (11) and a ball joint nut (16) articulated on the body (11), the cylindrical part (15) being mounted so as to pivot about its axis (Y) in the ball joint nut (16), **characterized in that** the cylindrical part (15) is intended to be integral with a fixed part (8) of the turbomachine (1), the body (11) of the ball joint housing being integral with the beam (10), **characterized in that** the cylindrical part (15) is mounted, at least in part, in a housing (17) of the body (11), a clearance (j1, j2) being provided between the said cylindrical part (15) and the body (11).

2. A system (7) according to claim 1, **characterized in that** it comprises a connecting element (22) mounted in the body (11) and mounted with clearance (j3) in the cylindrical part (15), the said clearance (j3) being permitted in particular according to the direction of the axis (Y) of the cylindrical part (15).

3. A system (7) according to claim 1 or 2, **characterized in that** the beam (10) comprises an upstream part at which the ball joint housing is located, and a downstream part used for attaching a spreader bar intended to support force-recovery rods.

4. A system (7) according to one of claims 1 to 3, **characterized in that** the cylindrical part (15) comprises a collar (18), the said collar (18) being intended to be attached to the fixed part (8) of the turbomachine (1).

5. A system (7) according to claim 4, **characterized in that** the cylindrical part (15) comprises at least one recessed area (20) intended to be located opposite a screw, the said recessed area (20) being arranged downstream of the collar (18).

6. A system (7) according to claim 4 or 5, **characterised in that** the cylindrical part (15) has a cylindrical upstream end (21) located upstream of the collar (18).

7. A double-flow turbojet (1) comprising a flow vein of a primary flow, known as the primary vein (2), delimited by a radially internal wall (2a) and a radially external wall (2b), and a flow vein of a secondary flow, known as the secondary vein (4), surrounding the primary vein and delimited by a radially internal wall (4a) and a radially external wall (4b) **characterised in that** it comprises a suspension system (7) according to one of claims 1 to 6, and **in that** the cylindrical part (15) is attached to a fixed part (8) of the turbojet (1), situated radially between the internal wall (4a) of the secondary vein (4) and the external wall (2b) of the primary vein (2), the said fixed part (8) being integral with at least one of the said walls (4a, 2b).

8. A turbojet (1) according to claim 7, **characterised in that** the secondary vein (4) comprises at least one arm (6) extending radially between the internal and external walls (4a, 4b) of the secondary vein (4), the said arm (6) being situated downstream of a fan (5) of the turbojet (1), the fixed part (8) to which the said cylindrical part (15) is attached being situated axially opposite the arm (6).

9. A turbojet (1) according to claim 7 or 8, **characterised in that** the dilution ratio of the said turbojet (1) is greater than 10.
